# EUROPÄISCHE PATENTSCHRIFT

(11) **EP 2 501 963 B1**
(45) Veröffentlichungstag und Bekanntmachung des Hinweises auf die Patenterteilung: **04.06.2014**
(21) Anmeldenummer: 10779810.0
(22) Anmeldetag: 18.11.2010
(51) Int. Cl.: F16J 15/44, F16J 15/453, F01D 11/02

(54) **ROTATIONSMASCHINE UND VERFAHREN ZUM HERSTELLEN EINER LABYRINTHDICHTUNG**
ROTARY MACHINE AND METHOD FOR PRODUCING A LABYRINTH SEAL
MACHINE TOURNANTE ET PROCÉDÉ DE PRODUCTION D'UN JOINT À LABYRINTHE

(30) Priorität: 19.11.2009 DE 102009053954
(43) Veröffentlichungstag der Anmeldung: 26.09.2012
(73) Patentinhaber: Siemens Aktiengesellschaft, 80333 München (DE)
(72) Erfinder: BODE, Ralf, 47441 Moers (DE)
(86) Internationale Anmeldenummer: PCT/EP2010/067751
(87) Internationale Veröffentlichungsnummer: WO 2011/061253

(56) Entgegenhaltungen:
- EP-A1- 2 058 565
- DE-A1- 4 439 950
- DE-A1- 10 361 499
- GB-A- 651 921
- US-A- 3 537 713

## Beschreibung

Die Erfindung betrifft eine Labyrinthdichtung zum Abdichten eines Dichtbereichs zwischen einem Rotor und Stator einer Rotationsmaschine mit einem Sockel und am Sockel angeformten und in einen Dichtbereich hineinragenden Dichtungsringen, die zwischen sich Labyrinthtäler bilden, die seitlich von den Dichtungsringen und in der Talsohle vom Sockel begrenzt sind. Außerdem betrifft die Erfindung ein Verfahren zum Herstellen einer Labyrinthdichtung zum Abdichten eines Dichtbereichs zwischen einem Rotor und Stator einer Rotationsmaschine.

Rotationsmaschinen, wie Strömungsmaschinen oder Turbomaschinen, müssen an Stellen unterschiedlichen Drucks abgedichtet werden, damit zu Wirkungsgradverlusten führende Leckagen möglichst gering bleiben. Abdichtungen zwischen einem rotierenden Teil, z.B. eine Welle, und einem Statorteil, wie einem Gehäuseteil, werden häufig als berührungslose Labyrinthdichtung ausgeführt. Dabei darf mit Rücksicht auf Wärmedehnung, Fliehkraftdehnung und einem Aufschwingen des Rotors in den Radiallagen und beim Durchfahren kritischer Drehzahlen das radiale Dichtspiel nicht zu klein werden. Ein zu klein gewählter Dichtspalt führt zum Anstreifen und damit zur Beschädigung der Labyrinthspitzen und schlimmstenfalls zur Verkrümmung des Rotors.

Aus dem Stand der Technik sind federnde Dichtsegmente einer Labyrinthdichtung bekannt, die bei einem Anstreifen ausweichen und so größere Beschädigungen vermeiden.

Der GB 651,921 offenbart eine Rotationsmachine gemäß Oberbegriff des Anspruchs 1, sowie ein Verfahren zum Herstellen einer Labyrinthdichtung*,* wobei ein Sockel erstellt wird und am Sockel zu einem Dichtbereich weisende Dichtungsringe angeformt werden, die zumindest bereichsweise aus einem anderen Material bestehen.

Es ist eine Aufgabe der Erfindung, eine Rotationsmaschine und ein Verfahren zum Herstellen einer Labyrinthdichtung anzugeben, mit denen einem Anstreifschaden am Rotor entgegengewirkt werden kann.

Die auf die Labyrinthdichtung gerichtete Aufgabe wird durch eine Labyrinthdichtung der eingangs genannten Art gelöst, bei der die Dichtungsringe erfindungsgemäß zumindest in zumindest einem Bereich aus zumindest einem anderen Material bestehen als der Sockel, insbesondere als der Sockel im Bereich der Talsohle. Das andere Material ist weicher als das Rotormaterial im Bereich der Labyrinthdichtung.

Die Erfindung geht von der Überlegung aus, dass insbesondere bei Verwendung einer Glattspaltlabyrinthdichtung, bei der die Labyrinthspitzen im Stator platziert sind, es sinnvoll ist, eventuell anstreifende Spitzen aus einem weicheren Material als das Rotormaterial herzustellen. Bei einem unerwünschten Anstreifen werden als Folge die Dichtspitzen beschädigt, welche im Allgemeinen leichter instand zu setzen oder auszutauschen sind, als die gegenüberliegende Komponente des Rotors. Besonders geeignet sind Aluminiumlegierungen, welche ein vorteilhaftes Anstreifverhalten gegenüber stählernen Rotorteilen aufweisen.

Nachteilig bei den meisten weichen Materialien, insbesondere den meisten Aluminiumlegierungen, ist jedoch, dass ihr thermischer Ausdehnungskoeffizient etwa doppelt so hoch ist, wie der von Stahl. Außerdem ist die Steifigkeit relativ gering, so dass ein steiferer Sockel oder Dichtungseinsatz verwendet werden sollte. Hierbei ist wegen der unterschiedlichen Ausdehnungskoeffizienten eine haltbare Verbindung zwischen einem vorderen, die Spitzen bildenden und weichen Bereich mit dem Sockel schwer herzustellen.

Durch die Erfindung bestehen nur die Dichtungsringe und insbesondere nur ein Bereich eines jeden Dichtungsrings aus dem anderen Material. Eine Verbindungsfläche zwischen dem Material des Sockels, der als Dichtungsträger oder Dichtungseinsatz dienen kann, und dem anderen Material kann somit sehr schmal gehalten werden, so dass die unterschiedlichen Ausdehnungskoeffizienten nur zu geringen Spannungen zwischen den unterschiedlichen Materialien führen.

Die Rotationsmaschine kann eine Strömungsmaschine sein, wie eine Turbine oder ein Verdichter oder eine andere Turbomaschinen, wie ein Generator. Der Sockel kann ein Dichtungsträger oder ein Dichtungseinsatz an einem Dichtungsträger sein oder beide Elemente umfassen. Die Dichtungsringe sind am Stator angeordnet und zum Rotor gewandt. Sie ragen in den Dichtungsbereich hinein, der zwischen dem Rotor und dem Stator im Bereich der Labyrinthdichtung liegt.

Die Labyrinthdichtung kann als Stolperbundlabyrinthdichtung mit einer wechselseitigen Anordnung von Dichtungsringen an Rotor und Stator oder als Glattspaltlabyrinthdichtung mit Ringen nur am Rotor oder Stator ausgeführt sein. Die Dichtungsringe können ein- oder mehrteilig sein und bilden zum Dichtbereich weisende Labyrinthspitzen, wobei eine Labyrinthspitze keine Punktspitze tragen muss sondern einen linienförmigen, insbesondere kreisförmigen Spitzenbereich aufweisen kann. Der Begriff "Labyrinthspitze" kann als Synonym für Dichtungsring verwendet werden und steht nicht nur für einen Spitzenbereich, sondern für ein gesamtes beispielsweise ringförmiges und zum Dichtbereich weisendes Element.

Die Dichtungsringe bzw. Labyrinthspitzen bilden zwischen sich Labyrinthkammern oder Labyrinthtäler, in denen die Labyrinthdichtung durchströmendes Gas verwirbelt und somit ein die Labyrinthdichtung durchlaufender Gasweg lang ist. Die Talsohle der Labyrinthtäler wird vom Sockel und damit aus Sockelmaterial gebildet. Die Labyrinthdichtung kann somit so ausgeführt sein, dass das andere Material zwischen den Dichtungsringen stets von Sockelmaterial unterbrochen wird, so dass die Verbindungsfläche zwischen Sockelmaterial und anderem Material stets klein oder schmal ist.

Der Bereich, in dem die Dichtungsringe aus dem anderen Material bestehen, ist zweckmäßigerweise der Bereich der Dichtungsringe, die zum Dichtbereich weisen, also unmittelbar an ihn grenzen. Der Bereich kann als eine oder mehrere Schichten ausgeführt sein, wobei die Schicht zweckmäßigerweise die vorderste Materialschicht der Dichtungsringe ist. Das andere Material kann somit ein- oder mehrschichtig aufgebaut sein, wobei bei einer Mehrzahl von Schichten jede Schicht aus einem Material besteht und diese Materialien unterschiedlich zueinander sind.

Das andere Material ist zweckmäßigerweise weicher als das Material des Rotors im Bereich der Labyrinthdichtung. Besonders geeignet sind Metalllegierungen oder polymere Werkstoffe. In einer vorteilhaften Ausführungsform der Erfindung sind die Dichtungsringe aus Aluminium oder einer Aluminiumlegierung hergestellt. Mit diesen Materialien können Anstreifschäden gering gehalten werden. Der Sockel ist zweckmäßigerweise aus Stahl, um eine hohe Steifigkeit zu gewährleisten. Bei Verwendung eines polymeren Werkstoffs sind Polyetheretherketon (PEEK) oder Polyimid (PI) besonders vorteilhaft.

Zweckmäßigerweise ist nur jeweils ein vorderer Bereich der Dichtungsringe aus dem anderen Material hergestellt. Hierdurch kann eine kleine Verbindungsfläche, insbesondere bei nach vorne schmaler werdenden Dichtungsringen, mit einer guten Steifigkeit der Labyrinthspitzen verbunden werden. Eine Verbindungsfläche zwischen dem Sockelmaterial und dem anderen Material verläuft somit innerhalb eines Dichtungsrings bzw. innerhalb der Dichtungsringe und insbesondere weiter vorne, also weiter zum Rotor, als die Talsohle.

Anstreifschäden können noch weiter reduziert werden, wenn das andere Material einen Festschmierstoff enthält. Als Festschmierstoff sind Graphit und graphitartige Stoffe, wie Molybdändisulfid (MoS₂) und α-Bornitrid (BN), vorteilhaft.

Der Festschmierstoff kann in Inseln mit einer Korngröße von z.B. über 10 µm im übrigen anderen Material vorliegen.

Erfindungsgemäß wird mit Hilfe einer haftvermittelnden Zwischenschicht aus einem dritten Material zwischen dem Sockelmaterial und dem anderen Material eine sehr feste und haltbare stoffschlüssige Verbindung zwischen dem Sockelmaterial und dem anderen Material erreicht.

Die auf das Verfahren gerichtete Aufgabe wird durch ein Verfahren zum Herstellen einer Labyrinthdichtung zum Abdichten eines Dichtbereichs zwischen einem Rotor und Stator einer Rotationsmaschine, gemäß Anspruch 7 gelöst. Erfindungsgemäß wird ein Sockel erstellt und anschließend werden am Sockel zu einem Dichtbereich weisende Dichtungsringe angeformt, die zumindest bereichsweise aus zumindest einem anderen Material als der Sockel bestehen. Auf diese Weise können Talsohlen der zwischen den Dichtungsringen gebildeten Labyrinthtälern aus dem Sockelmaterial gebildet werden, so dass das andere Material im Bereich der Talsohlen stets durch das Sockelmaterial unterbrochen ist.

Der Sockel kann eine Buchse - vor Fertigstellung ein Rohling einer Buchse - sein, an dessen Innenseite die Dichtungsringe angeformt sind. Sie kann einen Dichtungsträger und einen Dichtungseinsatz umfassen, an dessen Vorderseite die Dichtungsringe liegen, wobei die Richtung nach vorne zum Dichtungsbereich weist. Die Dichtungsringe können teilweise aus dem Sockelmaterial und dem anderen Material bestehen. Das andere Material kann bereichsweise unterschiedliche Materialien umfassen, z.B. ein Zwischenschicht bildendes und an das Sockelmaterial angrenzendes Zwischenmaterial und ein zum Anstreifen vorbereitetes Anstreifmaterial, das mit der Zwischenschicht verbunden ist und an diese angrenzt. Das Anformen kann durch Hinzufügen des anderen Materials an das Sockelmaterial und entsprechende Formgebung geschehen, z.B. durch ein spanendes Verfahren. Zweckmäßigerweise wird erst der Sockel erstellt, ggf. als Rohling, und danach werden die Dichtungsringe angeformt. Ebenfalls denkbar ist eine gleichzeitige Herstellung von Sockel und Dichtungsringen in einem gemeinsamen Verfahren.

Das Anformen der Dichtungsringe kann durch Plattieren des Sockelmaterials mit dem anderen Material erfolgen. Mit einer anschließenden mechanischen Beareitung können die Dichtungsringe fertig gestellt werden. Das Plattieren kann durch Aufwalzen, Aufschweißen oder Angießen des anderen Materials auf das Sockelmaterial erfolgen, durch Tauchen des Sockelmaterials in das andere Material oder durch Aufgalvanisieren. Zweckmäßigerweise wird das andere Material durch Sprengplattieren aufgebracht, wodurch eine sehr haltbare Verbindung zwischen den Materialien erreicht wird.

Das Plattieren kann ein Aufwalzen der beiden Materialien aufeinander umfassen, wobei die Materialien hierbei zweckmäßigerweise in ebener Form gewalzt werden und anschließende aus z.B. einer ebenen Form in die Sockelform, z.B. eine Buchse, umgeformt werden. Mit einer nachfolgenden spanenden Bearbeitung kann das Sockelmaterial in den Talsohlen freigelegt und die Dichtungsringe fertig gestellt werden.

Eine weitere nicht erfindungsgemäße Möglichkeit liegt in einem galvanischen Aufbringen des anderen Materials, und/oder erfidungsgemäß im Ausgießen des Sockels mit dem anderen Material durch Schleuderguss und einer anschließenden mechanischen Beareitung.

Die bisher und im Folgenden genannten Verfahren können hierbei alternativ oder in Kombination miteinander verwendet werden, z.B. indem das andere Material aus mehreren unterschiedlichen Schichten besteht, die in unterschiedlichen Verfahren hergestellt werden.

Werden die Dichtungsringe durch thermisches Spritzen des anderen Materials auf das Sockelmaterial hergestellt, so kann auf einfache Weise eine feste Verbindung zwischen den Materialien erzeugt werden. Ein weiteres nicht erfindungsgemäßes Verfahren liegt im Anbringen des anderen Materials an das Sockelmaterial als Pulver und im anschließenden Sintern des Pulvers. Ebenfalls vorteilhaft ist das Anformen der Dichtungsringe durch Diffusionsschweißen des anderen Materials an das Material des Sockels. Bei allen Verfahren kann das andere Material durch heißes isostatisches Pressen verdichtet und somit mechanisch hoch beanspruchbar gemacht werden.

Bei einigen der genannten Verfahren ist es vorteilhaft, wenn die Geometrie des Sockels und des anderen Materials im Herstellungsprozess der Dichtungsringe so gewählt wird, dass Unterschiede im thermischen Ausdehnungsverhalten von Sockelmaterial und anderem Material bei einem Erwärmen beider Materialien zu einem Einpressen des anderen Materials in das Sockelmaterial führen. Hierdurch kann das Herstellen einer festen Verbindung zwischen den Materialien begünstigt werden.

Anstelle des Erstellens der Dichtungsringe oder Bereichen hiervon aus der flüssigen Phase kann ein mehrteiliger Körper aus dem anderen Material in den als Buchse geformten Sockel eingeführt und mit der Buchse stoffschlüssig verbunden werden.

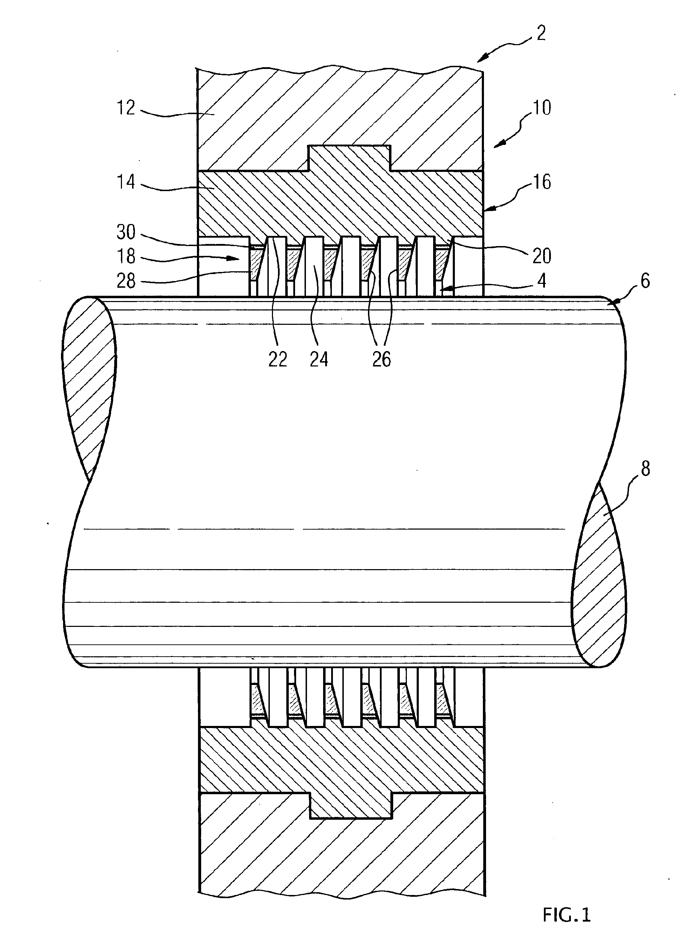

Die Erfindung wird anhand eines Ausführungsbeispiels näher erläutert, das in der Zeichnung dargestellt ist. Die einzige Figur der Zeichnung zeigt einen Ausschnitt einer als Glattspaltdichtung ausgeführten Labyrinthdichtung 2. Die Labyrinthdichtung 2 dichtet einen Dichtbereich in Form eines Spalts 4 zwischen einem Rotor 6, von dem ein Ausschnitt einer Welle 8 eines Turboverdichters dargestellt ist, und einem ortsfesten Stator 10 wenngleich nicht vollständig, so doch teilweise ab. Die Labyrinthdichtung 2 umfasst einen Dichtungsträger 12, der zum Rotor 6 hin einen Dichtungseinsatz 14 trägt. Dichtungsträger 12 und Dichtungseinsatz 14 sind Bestandteile des Stators 10 und sind somit ebenfalls ortsfest.

Der Dichtungsträger 12 bildet zusammen mit dem Dichtungseinsatz 14 einen Sockel 16, der sechs Dichtungsringe 18 trägt, die einstückig aus dem Sockel 16 ausgeformt sind. Der Sockel 16 und die Dichtungsringe 18 laufen um die Welle 8 um, wobei rund um die Welle 8 der Spalt 4 zwischen den Dichtungsringen 18 und der Welle 8 verbleibt. Dieser Spalt 4 lässt der Welle 8 einen Freiraum, um schwingen zu können, ohne an die Dichtungsringe 18 anzustreifen. Sind die Schwingungen jedoch stärker als die Breite des Spalts 4 so kommt es dennoch zu einem Anstreifen.

Um im Fall eines Anstreifens Schäden an der Welle 8 zu vermeiden, sind die Dichtungsringe 18 aus mehreren Materialien gefertigt. Ihre hintere, also von der Welle wegweisende, Basis 20 ist aus dem Material des Dichtungseinsatzes 14 - dem Sockelmaterial - gebildet. Dieses Sockelmaterial ist ein geeigneter Stahl. Wie aus der Figur ersichtlich ist, bildet dieses Material die Talsohlen 22 der zwischen den Dichtungsringen 18 angeordneten Labyrinthtälern 24, die außen bzw. hinten jeweils von der Talsohle 22 und seitlich von den Flanken 26 der benachbarten Dichtungsringe 18 begrenzt werden.

Vorne, also zum Rotor 6 hin, sind die Dichtungsringe 18 aus anderem Material 28 gebildet, nämlich aus einer Aluminiumlegierung. Ein besonders vorteilhaftes Material 28 ist eine Aluminiumsiliziumlegierung, insbesondere mit 12% ± 1% Silizium. Durch das Silizium liegt der thermische Ausdehnungskoeffizient bei 21x10⁻⁶/K ± 2x10⁻⁶/K und damit in der Nähe von nicht rostendem Stahl, der bei 18x10⁻⁶/K liegt. Hierdurch werden thermische Spannungen zwischen dem Sockelmaterial und dem anderen Material 28 auch bei starken Temperaturschwankungen, wie sie beispielsweise bei einem Anstreifen auftreten können, gering gehalten. Einem Abbrechen des vorderen Teils eines Dichtungsrings 18 bzw. einer Labyrinthspitze wird hierdurch entgegengewirkt.

Ebenfalls vorteilhaft für die Festigkeit der Dichtungsringe 18 ist es, dass die Grenzfläche zwischen dem anderen Material 26 und dem Sockelmaterial schmal, also klein ist. Auch bei unterschiedlichen Ausdehnungskoeffizienten bleibt daher die Spannung zwischen den Materialien auch bei starken Temperaturschwankungen gering.

Das andere Material 28 umfasst zwei Materialzonen unterschiedlichen Materials. Der vordere, zum Spalt 4 und damit zum Dichtbereich weisende Teil ist die Aluminiumlegierung und der hintere Teil ist eine Zwischenschicht 30, die eine Haftung zwischen dem Sockelmaterial und dem anderen Material 28, in diesem Ausführungsbeispiel zwischen dem Stahl und der Aluminiumlegierung, verstärkt. Als Zwischenschicht 30 eignet sich besonders eine Zinkschicht, die durch Feuerverzinken des Stahls auf den Stahl aufgebracht werden kann. Ebenfalls geeignet ist eine Nickelschicht, die galvanisch auf den Stahl aufgebracht werden kann.

Bei einem Anstreifen des Rotors 6 im Bereich der Labyrinthdichtung 2 an den Stator 10 kommen die Welle 8 und der vordere Bereich der Dichtungsringe 18 aus der Aluminiumlegierung in Kontakt miteinander. Die Aluminiumlegierung ist deutlich weicher als der Stahl der Welle 8, so dass eine Materialverformung zum weitaus größten Teil an den Dichtungsringen 18 auftritt und dort nur im vorderen Bereich aus dem Material 26 der Aluminiumlegierung. Ein Schaden an der Welle 8 bleibt somit so klein, dass sie keiner Reparatur bedarf. Je nach Verformung und/oder Materialabtrag von den Dichtungsringen 18 müssen diese ersetzt werden, wobei in diesem Fall der Dichtungseinsatz 14 mit den Dichtungsringen 18 ausgetauscht wird.

Um einen Schaden an der Welle 8 aber auch an den Labyrinthspitzen noch geringer zu halten, ist die Aluminiumlegierung mit einem Festschmierstoff versehen. Dieser liegt in Form von α-Bornitrid (BN) vor, das in kleinen, mehrere µm großen Inseln in der sie umgebenden Aluminiumlegierung vorliegt. Dieser Festschmierstoff reduziert die Gleitreibung zwischen Labyrinthspitzen und Welle 8, so dass eine Verformung der Labyrinthspitzen und ein Materialabtrag von ihnen verringert wird.

Zur Herstellung der Labyrinthdichtung 2 wird zunächst der Sockel 16 in Form einer Buchse hergestellt. Eine Anformung der Dichtungsringe an das Sockelmaterial erfolg anschließend in einem ersten Schritt, indem das andere Material als eine innere Schicht als Pulver an das Sockelmaterial gebracht und dort, beispielsweise mit Hilfe einer formgebenden Umhüllung, gehalten wird. Durch ein anschließendes Sintern des Pulvers wird die innere Schicht zu einer zusammenhaltenden Schicht. Danach wird durch heißes isostatisches Pressen zumindest eine äußere Schicht der Aluminiumlegierung verdichtet und Poren werden geschlossen.

In einem späteren Schritt werden die Dichtungsringe aus der kompakten inneren Schicht ausgeformt, indem die Labyrinthtäler durch spanende Bearbeitung in die innere Schicht und auch teilweise in das Sockelmaterial eingebracht werden, sodass die Talsohlen 22 ihre Lage im Sockelmaterial erhalten. Der fertig gestellte Dichtungseinsatz 14 wird in den Dichtungsträger 12 eingebracht und die Labyrinthdichtung 2 hierdurch an ihren Einsatzort gebracht.

Ein alternatives Verfahren umfasst die Bearbeitungsschritte, dass zunächst der Sockel 16 in Form einer Buchse erstellt wird. Dann wird das andere Material 28 als ein mehrteiliger Körper in die Buchse eingeführt. Durch Diffusionsschweißen werden die beiden Materialien miteinander stoffschlüssig verbunden. Hierbei ist die Geometrie des Sockels 16 und des anderen Materials 28 so gewählt ist, dass der größere thermische Ausdehnungskoeffizient des in diesem Ausführungsbeispiel verwendeten Aluminiums oder der Aluminiumlegierung dazu führt, dass sich das andere Material 28 stärker ausdehnt als das Sockelmaterial, so dass es bei einem Erwärmen beider Materialien in das Sockelmaterial hineingepresst wird. Hierdurch wird die beim Diffusionsschweißen hergestellte Verbindung der beiden Materialien unterstützt, so dass eine festere Verbindung entsteht, als ohne Einpressen.

## Patentansprüche

1. Rotationsmaschine mit einem Rotor (6) und einem Stator (8) sowie mit einer am Stator angeordneten Labyrinthdichtung (2) zum Abdichten eines Dichtbereichs zwischen dem Rotor (6) und dem Stator (8), wobei die Labyrinthdichtung (2) einen Sockel (16) und am Sockel (16) angeformte und in den Dichtbereich hineinragende Dichtungsringe (18) aufweist, die zwischen sich Labyrinthtäler (24) bilden, die seitlich von den Dichtungsringen (18) und in der Talsohle (22) vom Sockel (16) begrenzt sind, und die in zumindest einem Bereich aus zumindest einem anderen Material (28) bestehen als der Sockel (16), das weicher ist als ein Rotormaterial im Bereich der Labyrinthdichtung (2),
**dadurch gekennzeichnet, dass**
zwischen dem Sockelmaterial und dem anderen Material (28) eine haftvermittelnde Zwischenschicht (30) aus einem dritten Material vorhanden ist.

2. Rotationsmaschine nach Anspruch 1,
**dadurch gekennzeichnet, dass**
die Dichtungsringe (18) in dem Bereich aus einer Aluminiumlegierung und der Sockel (16) aus Stahl bestehen.

3. Rotationsmaschine nach Anspruch 2,
**dadurch gekennzeichnet, dass**
die Dichtungsringe (18) in dem Bereich aus einem polymeren Werkstoff bestehen.

4. Rotationsmaschine nach einem der vorhergehenden Ansprüche,
**dadurch gekennzeichnet, dass**
nur ein vorderer Bereich der Dichtungsringe (18) aus dem anderen Material (28) hergestellt ist.

5. Rotationsmaschine nach einem der vorhergehenden Ansprüche,
**dadurch gekennzeichnet, dass**
das andere Material (28) einen Festschmierstoff enthält.

6. Rotationsmaschine nach einem der vorhergehenden Ansprüche,
**dadurch gekennzeichnet, dass**
die haftvermittelnde Zwischenschicht (30) eine Zinkschicht oder eine Nickelschicht ist.

7. Verfahren zum Herstellen einer Labyrinthdichtung (2) zum Abdichten eines Dichtbereichs zwischen einem Rotor (6) und Stator (10) einer Rotationsmaschine, bei dem ein Sockel (16) erstellt wird und am Sockel (16) zu einem Dichtbereich weisende Dichtungsringe (18) angeformt werden, die zumindest bereichsweise aus einem anderen Material (28) als der Sockel (16) bestehen, wobei das Anformen der Dichtungsringe (18) mittels mindestens eines Verfahrens erfolgt, ausgewählt aus einer Gruppe von Verfahren umfassend:
- ein Sprengplattieren des Sockelmaterials mit dem anderen Material (28) und eine anschließende mechanische Bearbeitung,
- ein Ausgießen des Sockels (16) mit dem anderen Material (28) durch Schleuderguss und eine anschließende mechanische Bearbeitung,
- ein Verdichten durch ein heißes isostatisches Pressen, wobei das andere Material (28) auf das Sockelmaterial aufgebracht wird und zumindest das andere Material (28) anschließend durch das heiße isostatische Pressen verdichtet wird,
- ein Erwärmen eines Sockelmaterials und des anderen Materials, wobei die Geometrie des Sockels (16) und des anderen Materials (28) im Herstellungsprozess der Dichtungsringe (18) so gewählt ist, dass Unterschiede im thermischen Ausdehnungsverhalten vom Sockelmaterial und anderem Material (28) bei dem Erwärmen beider Materialien zu einem Einpressen des anderen Materials (28) in das Sockelmaterial führt,
- ein Einführen eines mehrteiligen Körpers aus dem anderen Material (28) in eine Buchse, wobei der Sockel (16) die Buchse bildet, und ein stoffschlüssiges Verbinden des mehrteiligen Körpers mit der Buchse.

8. Verfahren nach Anspruch 7,
**dadurch gekennzeichnet, dass**
die mechanische Bearbeitung ein Formen der entstandenen Hybridschicht zu einer Buchse und eine spanende Bearbeitung umfasst.

## Claims

1. Rotary machine having a rotor (6) and a stator (8) and a labyrinth seal (2) which is arranged on the stator and which serves for sealing a sealing region between the rotor (6) and the stator (8), wherein the labyrinth seal (2) has a base (16) and sealing rings (18) which are formed on the base (16) and which project into the sealing region and which, between them, form labyrinth valleys (24) bounded laterally by the sealing rings (18) and, in the floor (22) of the valleys, by the base (16) and which, in at least one region, are composed of at least one material (28) different from that of the base (16) and softer than a rotor material in the region of the labyrinth seal (2), **characterized in that** an adhesion-promoting intermediate layer (30) made of a third material is present between the base material and the different material (28).

2. Rotary machine according to Claim 1, **characterized in that** the sealing rings (18), in said region, consist of an aluminum alloy and the base (16) consists of steel.

3. Rotary machine according to Claim 2, **characterized in that** the sealing rings (18), in said region, consist of a polymer material.

4. Rotary machine according to one of the preceding claims, **characterized in that** only a front region of the sealing rings (18) is produced from the different material (28).

5. Rotary machine according to one of the preceding claims, **characterized in that** the different material (28) contains a solid lubricant.

6. Rotary machine according to one of the preceding claims, **characterized in that** the adhesion-promoting intermediate layer (30) is a zinc layer or a nickel layer.

7. Method for producing a labyrinth seal (2) for sealing a sealing region between a rotor (6) and stator (10) of a rotary machine, and in the case of which a base (16) is created and sealing rings (18) are formed thereon, these sealing rings being oriented in the direction of a sealing region and consisting, at least in certain regions, of a material (28) which is different from that of the base (16), wherein the operation of forming on the sealing rings (18) is carried out by means of at least one method selected from a group of methods comprising:
- explosion cladding of the base material with the different material (28) and, subsequent mechanical processing,
- application of the different material (28) to the base (16) by centrifugal casting, and subsequent mechanical processing,
- compression by hot isostatic pressing, wherein the different material (28) is applied to the base material, and at least the different material (28) is then compressed by the hot isostatic pressing,
- heating of a base material and of the different material, wherein by selection of the geometry of the base (16) and of the different material (28) during production of the sealing rings (18) such that differences in the thermal-expansion behavior of the base material and different material (28), when the two materials are heated, results in the different material (28) being forced into the base material,
- introduction of a multi-part body made of the different material (28) into a bushing, wherein the base (16) forms the bushing, and integral connection of the multi-part body to the bushing.

8. Method according to Claim 7, **characterized in that** the mechanical processing comprises forming the resulting hybrid layer into a bushing, and cutting work.

## Revendications

1. Machine tournante comprenant un rotor ( 6 ) et un stator ( 8 ) ainsi qu'un joint ( 2 ) à labyrinthe disposé sur le stator pour rendre étanche une zone d'étanchéité entre le rotor ( 6 ) et le stator ( 8 ), le joint ( 2 ) à labyrinthe ayant une embase ( 16 ) et des bagues ( 18 ) d'étanchéité, qui sont formées sur l'embase ( 16 ), qui pénètrent dans la zone d'étanchéité et qui forment entre elles des vallées ( 24 ) de labyrinthe, qui sont délimités latéralement par les bagues ( 18 ) d'étanchéité et dans le fond ( 22 ) des vallées par l'embase ( 16 ) et qui sont constituées dans au moins une zone en au moins un matériau ( 28 ) autre que l'embase ( 16 ), matériau qui est plus tendre qu'un matériau du rotor dans la zone du joint ( 2 ) à labyrinthe,
**caractérisée en ce que**,
une couche ( 30 ) intermédiaire adhésive, en un troisième matériau, est présente entre le matériau de l'embase et l'autre matériau ( 28 ).

2. Machine tournante suivant la revendication 1,
**caractérisée en ce que**,
les bagues ( 18 ) d'étanchéité dans la zone sont en alliage d'aluminium et l'embase ( 16 ) en acier.

3. Machine tournante suivant la revendication 2,
**caractérisée en ce que**,
les bagues ( 18 ) d'étanchéité dans la zone sont en un matériau polymère.

4. Machine tournante suivant l'une des revendications précédentes,
**caractérisée en ce que**,
seule une zone avant des bagues ( 18 ) d'étanchéité sont en autre matériau ( 28 ).

5. Machine tournante suivant l'une des revendications précédentes,
**caractérisée en ce que**,
l'autre matériau ( 28 ) contient une substance lubrifiante solide.

6. Machine tournante suivant l'une des revendications précédentes,
**caractérisée en ce que**,
la couche ( 30 ) intermédiaire adhésive est une couche de zinc ou une couche de nickel.

7. Procédé de fabrication d'un joint ( 2 ) à labyrinthe pour rendre étanche une zone d'étanchéité entre un rotor ( 6 ) et un stator ( 10 ) d'une machine tournante, dans lequel on établit une embase ( 16 ) et on forme sur l'embase ( 16 ) des bagues ( 18 ) d'étanchéité, tournées vers une zone d'étanchéité et constituées au moins par endroit en un matériau ( 28 ) autre que celui de l'embase ( 16 ), la formation des bagues ( 18 ) d'étanchéité s'effectuant à l'aide d'au moins un procédé, choisi dans un groupe de procédés comprenant :
- un placage par explosion du matériau de l'embase avec l'autre matériau ( 28 ) et un traitement mécanique ensuite,
- une coulée de l'embase ( 16 ) avec l'autre matériau ( 28 ) par coulée par centrifugation et ensuite un traitement mécanique,
- une compression par une compression isostatique à chaud, dans laquelle l'autre matériau ( 28 ) est déposé sur le matériau d'embase et au moins l'autre matériau ( 28 ) est comprimé ensuite par compression isostatique à chaud,
- un échauffement du matériau de l'embase et de l'autre matériau, les géométries de l'embase ( 16 ) et de l'autre matériau ( 28 ) étant choisies dans le procédé de fabrication des bagues ( 18 ) d'étanchéité de manière à ce que des différences des propriétés de dilatation thermique du matériau de l'embase et de l'autre matériau ( 28 ) provoquent, lors de l'échauffement des deux matériaux, un enfoncement de l'autre matériau ( 28 ) dans le matériau de l'embase,
- une introduction d'une pièce en plusieurs parties en l'autre matériau dans une douille, l'embase ( 16 ) formant la douille, et une liaison à coopération de matière de la pièce en plusieurs parties avec la douille.

8. Procédé suivant la revendication 7,
**caractérisé en ce que** le traitement mécanique comprend une mise de la couche hybride créée sous la forme d'une douille et un traitement par enlèvement de copeaux.
